# DEMANDE DE BREVET EUROPEEN

(11) **EP 0 648 431 A1**
(43) Date de publication de la demande: **19.04.1995**
(21) Numéro de dépôt: 94402077.5
(22) Date de dépôt: 19.09.1994
(51) Int. Cl.: A23L 1/48, A23L 1/31, A23L 1/39, A23P 1/08

(54) **Préparation culinaire comprenant au moins deux sous-ensembles: une partie principale et une portion de sauce enrosée**

(30) Priorité: 20.09.1993 FR 9311168
(71) Demandeur: Oliver, Michel, Paris 6ème (FR); Lancien, Patrick Pierre Roger, F-72300 Sable sur Sarthe (FR)
(72) Inventeur: Oliver, Michel, Paris 6ème (FR); Lancien, Patrick Pierre Roger, F-72300 Sable sur Sarthe (FR)
(74) Mandataire: Rataboul, Michel Charles

(57) **Abrégé**

La préparation culinaire est caractérisée en ce qu'elle consiste en un ensemble qui comprend au moins deux sous-ensembles distincts :
* un premier sous-ensemble comportant au moins une partie principale telle que de la chair hachée (12),
* un deuxième sous-ensemble (52) comportant au moins une sauce (21) qui est enrobée d'un corps de nature collante (42),

ces deux sous-ensembles distincts étant placés l'un contre l'autre.

## Description

Le succès de la restauration rapide est essentiellement dû à la rapidité du service, qu'il s'agisse de consommation sur place ou de la vente à emporter et non pas à la qualité des aliments proposés.

Il est donc clair que l'amélioration de la qualité des aliments proposés est un vrai problème dont la solution permettrait de concilier les besoins de rapidité et une alimentation saine, variée et de bonne qualité.

Les Déposants ont déjà décrit dans le brevet FR-A-2.663.205 une préparation culinaire constituant une solution au problème énoncé ci-dessus.

Cette préparation culinaire présente l'avantage de s'adapter aux méthodes industrielles modernes tout en fournissant au consommateur final un produit ayant de grandes qualités gustatives du fait que cette préparation comporte une sauce susceptible de comporter d'excellents composants extrêmement variés, de haut niveau gastronomique.

L'invention décrite dans ce brevet prévoit l'association à froid de deux éléments, un support alimentaire et une sauce surgelée et leur cuisson simultanée.

Lors de la cuisson de l'ensemble, la sauce se liquéfie et imprègne le support alimentaire sur lequel elle a été posée lorsqu'elle était froide et rigide.

La liquéfaction de la sauce impose que l'autre élément soit véritablement un support, c'est-à-dire qu'il soit placé sous la sauce pour la recevoir et l'absorber, au moins en partie.

Or, il existe des méthodes de préparation d'aliments de restauration rapide qui n'autorisent pas cette disposition, du fait que l'aliment devant constituer le support doit être déplacé pour être conduit entre deux grils verticaux, afin que ceux-ci le cuisent par ses deux faces, ce qui implique que l'aliment est disposé verticalement. Il ne peut donc plus être placé horizontalement sous la sauce.

On comprend que l'on ne peut pas placer la sauce contre le "support" vertical car dès que la cuisson simultanée des deux éléments aura provoqué la liquéfaction de la sauce, celle-ci s'effondrera verticalement, à côté du "support" au lieu de se répandre en lui.

La présente invention constitue une solution à ce problème en permettant d'obtenir le même résultat final : un "support" alimentaire imprégné d'une sauce conservée par le froid, grâce à l'emploi de moyens tout à fait différents.

Cette solution est tout à fait différente de celles déjà proposées, l'état de la technique étant constitué par les documents ci-après :
- Le document de brevet EP-A-0 258 957 qui décrit un procédé pour combiner une sauce et un beignet.

Le "substrat alimentaire" correspond au "premier sous-ensemble" de la présente demande et est totalement enrobé par de la pâte à beignet.

Ce document explique qu'une pré-cuisson d'un beignet provoque l'exsudation d'humidité provenant du substrat, humidité qui détrempe intérieurement la pâte à beignet, et l'invention consiste à utiliser ce phénomène pour créer une sauce in situ, en enrobant le substrat d'un produit solide.

L'invention de la présente demande est radicalement différente, et même incompatible, avec ces dispositions puisqu'elle décrit un produit alimentaire ayant deux composants distincts, l'un ne devant surtout pas enrober l'autre puisqu'ils doivent être cuits séparément.
- Le document de brevet FR-A-2 663 205, aux noms des Déposants de la présente demande, décrit un produit alimentaire comprenant une sauce qui n'est pas enrobée d'un corps de nature collante. Le procédé qui fait l'objet de ce document antérieur est incompatible avec certaines méthodes de cuisson, et c'est précisément la solution à ce problème d'incompatibilité qu'apporte l'invention ici décrite. En effet, le document FR-A-2 663 205 décrit un produit alimentaire comprenant un support et une sauce sans enrobage, ces deux composants devant être cuits ensemble.
- Le document de brevet US-A-4 861 603 décrit un produit alimentaire comprenant un produit humide logé dans une capsule insoluble à l'eau faite de pousses de soja et devant être cuit avec son contenu.
- Le document de brevet PATENT ABSTRACT OF JAPAN vol.5 n° 102 décrit une recette pour faire une croquette. Sachant que la définition même d'une croquette étant d'être enrobée d'oeuf et de chapelure, ce document ne divulgue, comme élément nouveau, que la composition interne de la croquette, composition qui n'a strictement rien à voir avec une sauce.
- Le document de brevet FR-A-2 571 598 décrit un produit alimentaire formé de viande hachée entourant un accompagnement de légumes. Ici encore, on retrouve la notion d'enrobage qui est contraire à la présente invention.

A cette fin, l'invention a pour objet une préparation culinaire caractérisée en ce qu'elle consiste en un ensemble qui comprend au moins deux sous-ensembles distincts:
* un premier sous-ensemble comportant au moins une partie principale telle que de la chair hachée,
* un deuxième sous-ensemble comportant au moins une sauce qui est enrobée d'un corps de nature collante, ces deux sous-ensembles distincts étant placés l'un contre l'autre.

Selon d'autres caractéristiques de cette préparation :
- le deuxième sous-ensemble est recouvert d'un revêtement de cohésion, tel que de la chapelure;
- le deuxième sous-ensemble est conditionné seul et conservé ainsi;
- le premier sous-ensemble est surgelé;
- le premier sous-ensemble est frais;
- le premier sous-ensemble est pré-cuit;
- les deux sous-ensembles sont placés l'un contre l'autre.
- les deux sous-ensembles sont séparés par d'autres produits alimentaires;
- après cuisson, le deuxième sous-ensemble se dissocie lors de la consommation de l'ensemble et nappe en l'imprégnant au moins en partie le premier sous-ensemble ainsi que, le cas échéant, les autres produits alimentaires.

L'invention a également pour objet un procédé pour obtenir une préparation culinaire consistant en un ensemble qui comprend au moins deux sous-ensembles caractérisé en ce que l'on prépare un sous-ensemble comportant une sauce, que l'on divise cette dernière en portions, que l'on enrobe chaque portion avec un corps de nature collante, que l'on refroidit ledit sous-ensemble et qu'on le conserve.

Selon d'autres caractéristiques de ce procédé :
- on prépare une sauce, on place cette dernière dans un moule de mise en forme et on la refroidit;
- on la moule portion par portion;
- on la démoule et on la découpe en tranches formant chacune une portion froide et rigide;
- on donne au moule une section dont la forme et les dimensions correspondent à celles de la partie principale;
- on recouvre chaque portion enrobée au moyen d'un revêtement de cohésion;
- afin d'obtenir une préparation culinaire cuite, chaude et prête à la consommation :

* on soumet séparément les deux sous-ensembles à deux traitements thermiques distincts jusqu'à ce que le premier sous-ensemble soit cuit et que le deuxième sous-ensemble présente une partie extérieure formée d'une croûte imperméable contenant une sauce de consistance nappante,
* on associe au moins deux sous-ensembles et, éventuellement, des compléments alimentaires.

L'invention sera mieux comprise par la description détaillée ci-après faite en référence au dessin annexé. Bien entendu, la description et le dessin ne sont donnés qu'à titre d'exemple indicatif et non limitatif.

La figure 1 est une vue schématique montrant la préparation d'un premier sous-ensemble conforme à l'invention comportant une partie principale qui, ici, est de la viande hachée.

La figure 2 est une vue schématique montrant l'élaboration d'un deuxième sous-ensemble conforme à l'invention, à partir d'une sauce, d'un corps de nature collante et d'un revêtement de cohésion, figure qui illustre deux variantes pour mettre en forme le deuxième sous-ensemble.

La figure 3 est une vue schématique en coupe d'un sous-ensemble obtenu selon le schéma de la figure 2, formé d'une sauce enrobée d'une couche de corps de nature collante et d'un revêtement extérieur de cohésion, le tout froid, la sauce interne pouvant même être surgelée.

La figure 4 montre un exemple de conditionnement du sous-ensemble de la figure 3.

La figure 5 est une vue schématique illustrant la cuisson du premier sous-ensemble par grillage.

La figure 6 est une vue schématique illustrant la cuisson du deuxième sous-ensemble par grillage.

La figure 7 est une vue schématique illustrant l'opération qui consiste à réunir deux sous-ensembles cuits séparément, à les combiner éventuellement avec des compléments alimentaires, des épices et autres ingrédients.

La figure 8 est une vue schématique d'une préparation alimentaire conforme à l'invention, complète, cuite, chaude et présentée dans une assiette pour une consommation traditionnelle.

La figure 9 est une vue schématique d'une préparation alimentaire conforme à l'invention, complète, cuite, chaude et présentée entre deux morceaux de pain, pour une consommation en sandwich.

Comme cela ressort de ce que l'on a indiqué plus haut, l'invention permet d'associer, juste avant la consommation, deux éléments solides, préparés séparément, et cuits séparément.

Actuellement, on n'utilise qu'un seul élément solide que l'on qualifie ici de "partie principale" parcequ'il s'agit de la base même de la préparation.

Il s'agit toujours de chair hachée (pour éviter la besoin d'un couteau) et, dans l'immense majorité des cas, de "hamburger", c'est-à-dire de viande de bovidés comprenant un proportion de gras très importante (jusqu'à 30 %).

La chair hachée est comprimée en forme d'ovale ou de carré et cuite, généralement par grillage, puis est placée en sandwich entre deux morceaux de pain.

Cette "partie principale" est servie avec un assaisonnement prédominant qui consiste d'une part en une sauce coulante, maintenue à température de consommation, que l'on répand sur le hamburger encore chaud posé sur l'un des deux morceaux de pain, et, d'autre part, en des compléments alimentaires : feuilles de salade, rondelles de tomates et de cornichons, etc., le tout étant couronné par le deuxième morceau de pain.

Parfois la "partie principale" est faite de poisson, ou de volaille.

Selon l'invention, on utilise au moins deux éléments solides, comme cela a déjà été décrit dans le brevet FR-A-2.663.205, avant de terminer la préparation par l'ajout éventuel de compléments alimentaires.

Ici, les deux éléments solides sont dénommés "sous-ensembles" car ils concourrent tous deux à composer un ensemble.

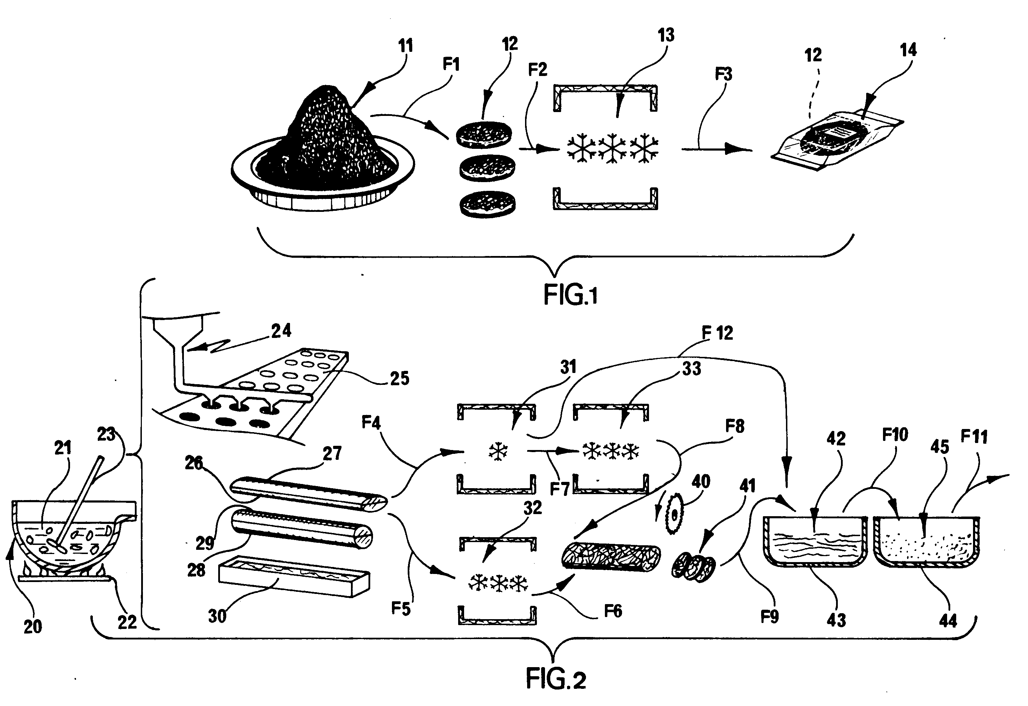

Dans l'exemple que l'on retient ici pour illustrer l'invention, en particulier sur la figure 1, la partie principale du premier sous-ensemble est constituée de viande hachée 11, que l'on fractionne pour obtenir, selon la flêche F1, des portions conformées et comprimées en forme de palets ovales 12. Comme on le sait, ces palets peuvent aussi être ronds, rectangulaires, carrés, etc.

Ils sont aussitôt que possible transférés selon la flêche F2 dans une enceinte de refroidissement rapide 13 pour être congelés en vue de leur conservation.

Selon une technique connue, la viande hachée 11 est d'abord conformée dans un moule, puis surgelée, puis découpée après surgélation au lieu d'être fractionnée à température ambiante, avant surgélation.

Ici, on a retenu le cas où chaque palet 12, extrait de l'enceinte 13 selon la flêche F3 est conditionné dans une enveloppe individuelle 14, constituée, comme cela est connu en soi, par une feuille en matière synthétique de qualité dite "alimentaire", fermée hermétiquement par soudure.

Ainsi conditionnés, les palets 12 peuvent être stockés puis livrés en vue de leur cuisson pour la consommation.

La figure 2 illustre l'élaboration du deuxième sous-ensemble.

Dans un récipient 20, on prépare une sauce 21, en la faisant cuire sur une source de chaleur 22 et en l'homogénéisant avec un mélangeur 23.

Quand la sauce 21 est cuite, on la laisse reposer puis on la place dans un moule de section coordonnée à la forme des palets 12.

Sur la figure 2, l'accolade évoque deux solutions : Ou bien on verse la sauce 21 par doses, au moyen d'une doseuse 24, dans des alvéoles d'un moule à empreintes 25, auquel cas on obtient des portions individuelles que l'on refroidit pour leur conservation. Ou bien on la moule en plus grande quantité, dans des moules de différentes sections : le moule 26 a une section ovale et possède un couvercle 27; le moule 28 a une section circulaire et possède un couvercle 29; le moule 30 a une section quadrangulaire et ne possède pas de couvercle car on peut le remplir de sauce 21 jusqu'au voisinage de son bord. Les moules 26 et 28 doivent avoir un couvercle pour permettre leur remplissage selon toute leur section et pour faciliter leur démoulage.

On adopte pour les moules une section qui correspond à la forme connue des palets 2. Lorsque la partie principale est de la viande hachée, on trouve dans le commerce des steaks surgelés de forme carrée, rectangulaire ou ovale. Dans ce cas, on choisit pour la sauce 21 un moule de type 30. Dans certains établissements de restauration rapide, des hamburgers sont placés entre deux tranches de pain rond et, de ce fait, ont également une forme ronde.

Pour ce type de steaks, on choisira pour la sauce 21 le moule 28 à section circulaire. Généralement, les bouchers fournissent à leurs clients, particuliers ou restaurateurs, des steaks de viande hachée, "reconstitués" sous forme ovale. La sauce 21 destinée à ces steaks sera alors placée dans un moule de type 26.

Bien entendu, on peut choisir toute autre section correspondant à la forme des palets 2.

Ce qui vient d'être dit à propos des moules 26, 28 et 30 est, bien entendu, applicable à la forme des alvéoles du moule 25.

Le moule une fois rempli, est placé dans une enceinte réfrigérée pour provoquer le refroidissement de la sauce 21.

La surgélation immédiate au minimum à - 35° Celsius, de la sauce 21, notamment par passage du moule 25 dans un tunnel de surgélation, permet d'éviter que la sauce se détériore : retombée d'une sauce émulsionnée, décation d'une sauce contenant des morceaux, cristallisation etc.

Le moule 25 peut être constitué par une plaque thermoformée en matière synthétique de qualité dite "alimentaire", facile à produire selon différentes formes et dimensions demandées par le marché, y compris des formes allongées pour accompagner des sandwichs tels que ceux connus sous le nom de "hot dogs".

Selon les circonstances, on peut souhaiter conserver la sauce 21 en la maintenant simplement à une température dite de "froid positif" c'est-à-dire au-dessus de 0° Celsius, ou bien la surgeler sans tarder.

Il est possible, en effet, de conserver la sauce 21 jusqu'à utilisation sans faire appel à la surgélation. En revanche, la surgélation a pour avantage de rendre la sauce 21 extrêmement dure et, donc, facile à manipuler et à fractionner.

Dans le premier cas, le moule rempli de sauce 21 est placé, selon la flêche F4, dans une enceinte (ou tunnel) de conservation 31 où règne une température positive, de l'ordre de + 3° à + 6° Celsius.

Dans le second cas, le moule rempli de sauce 21 est placé, selon la flêche F5, dans une enceinte (ou tunnel) de surgélation 32.

Le symbole des trois cristaux de neige a été retenu ici pour évoquer une température de l'ordre de - 30° Celsius. La surgélation est une opération connue en soi et qui ne sera donc pas décrite en détail.

Après sortie de l'enceinte de surgélation 32 selon la flêche F6, dans le moule ou après extraction du moule, la sauce 21 surgelée est très dure et présente une forme de cylindre qui peut être fractionnée facilement, par exemple au moyen d'une scie circulaire 40, pour obtenir des tranches 41.

Si l'on veut à la fois concerver la sauce 21 dans l'enceinte 31 et bénéficier des avantages de la surgélation, le moule rempli de sauce 21 est transféré selon la flêche F7 de l'enceinte 31 à une enceinte de surgélation 33 qui peut, bien entendu, être aussi l'enceinte 32. Dès que la surgélation est achevée, le moule rempli de sauce 21 est extrait de l'enceinte 33 selon la flêche F8 et l'on est ainsi ramené au cas déjà décrit ci-dessus : fractionnement au moyen de la scie circulaire 40, pour obtenir des tranches 41.

Les tranches 41 sont composées exclusivement de sauce 21 et ne peuvent pas être utilisées en l'état si elles ne sont pas destinées à être posées sur des palets 12 disposés horizontalement.

Pour donner aux tranches de sauce 41 une tenue mécanique convenable leur permettant d'être réchauffées jusqu'à la température de consommation sans qu'elles s'effondrent, chacune d'elles est trempée, comme le suggère la flêche F9, dans un corps de nature collante 42 disposé dans un récipient 43, puis après que chaque tranche ait été convenablement enrobée, elle est transférée du récipient 43 vers un autre récipient 44, selon la flêche F10, dans lequel se trouve un produit 45 destiné à se fixer à la surface du corps 42 en le recouvrant tout entier.

Dès que chaque tranche de sauce 41 enrobée de corps de nature collante 42 est revêtue complètement de produit 45, elle est retirée du récipient 44 selon la flêche F11.

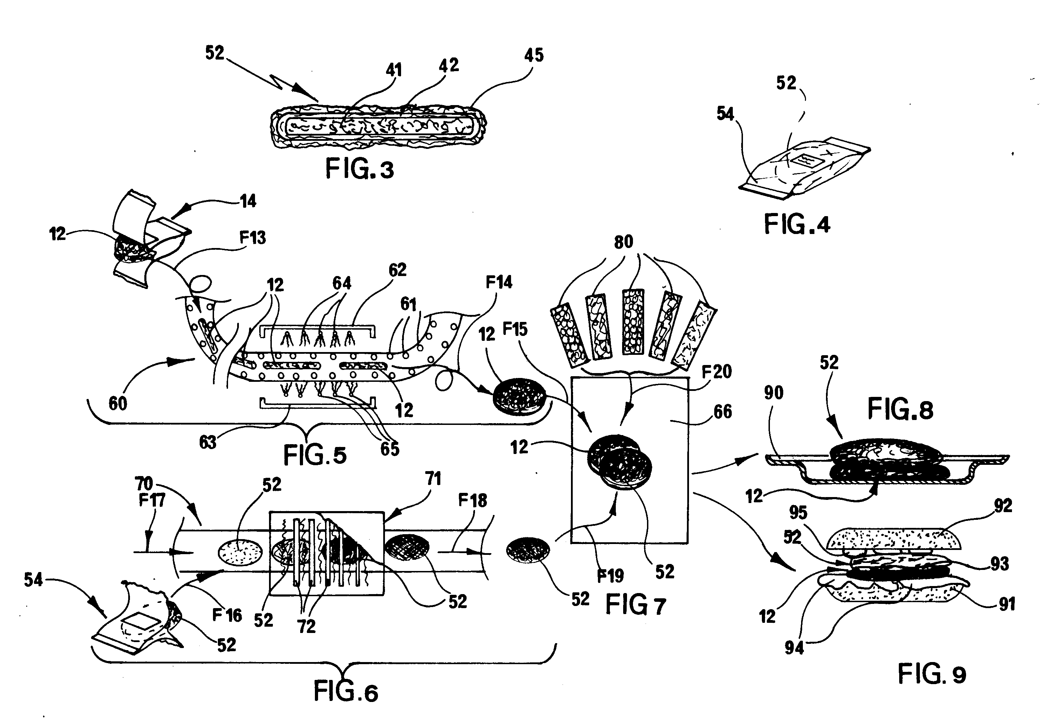

On obtient ainsi un sous-ensemble qui est représenté en coupe sur la figure 3 et que l'on désigne globalement par la référence 52.

A noter que si l'on doit conserver la sauce 21 à température de froid positif dans l'enceinte 31 et que l'on ne veut pas soumettre la sauce 21 à la surgélation, le moule rempli de sauce 21 est extrait de l'enceinte 31 selon la flêche F12 et l'on est ainsi ramené au cas déjà décrit ci-dessus : fractionnement en tranches 41 et trempage de chacune de celles-ci dans le corps de nature collante 42, puis dans le produit 45.

On obtient ainsi, comme avec la variante précédente, un sous-ensemble qui est représenté en coupe sur la figure 3 et que l'on désigne globalement par la référence 52.

Au centre, se trouve la tranche de sauce 41, autour de celle-ci le corps de nature collante 42, le tout enveloppé du revêtement formé par le produit 45.

Le sous-ensemble 52 peut maintenant être conservé et stocké, avantageusement par surgélation.

Il peut être conditionné seul ou en groupe.

Ici, on a retenu le cas où chaque sous ensemble 52 est conditionné dans une enveloppe individuelle 54, constituée, comme cela est connu en soi, par une feuille en matière synthétique de qualité dite "alimentaire", fermée hermétiquement par soudure, comme représenté sur la figure 4.

Après conditionnement, les sous-ensembles 52 peuvent être stockés puis livrés en vue de leur cuisson pour la consommation.

Les sous-ensembles 12 et les sous-ensembles 52 sont conditionnés, surgelés et stockés séparément.

En vue de leur consommation, ils sont cuits également séparément : les sous-ensembles sont cuits selon le schéma de la figure 5, tandis que les sous-ensembles 52 sont cuits selon le schéma de la figure 6.

En suivant le schéma de la figure 5, on voit que chaque sous-ensemble 12 est retiré de son enveloppe 14 (qui est éliminée), ce que l'on a schématisé par la flêche F13, et est placé sur un transporteur 60 de tout type connu possédant des moyens pour maintenir chaque sous-ensemble 12 verticalement, tels que des tiges 61, solidaires de la partie mobile du transporteur et entraînées par lui. Leur écartement latéral est un peu supérieur à l'épaisseur d'un sous-ensemble 12 afin que celui-ci puisse facilement être mis en place avant cuisson et retiré après cuisson.

Ce mode opératoire est choisi par préférence à la cuisson traditionnelle sur une plaque chaude horizontale car avec celle-ci chaque sous-ensemble 12 devrait nécessairement être posé à plat, par l'une de ses faces, et l'on n'obtient la cuisson complète que par retournement, de sorte que la cuisson de la première face laisse la face opposée froide et après retournement, la cuisson de la face opposée permet à la première face de refroidir.

Ici, au contraire, les deux faces de chaque sous-ensemble peuvent être cuites simultanément.

En effet, le transporteur 60 passe entre deux grils verticaux 62 et 63 à éléments radiants 64 et 65 disposés face à face.

La vitesse du transporteur 60, la longueur des grils 62 et 63, le nombre d'éléments radiants 64 et 65 sont coordonnés pour obtenir la décongélation, le réchauffage et la cuisson complète des sous-ensembles 12 dans les meilleures conditions possibles et indéfiniment répétées automatiquement, sans les aléas de la pratique manuelle.

A la sortie des grils 62 et 63, chaque sous-ensemble 12 est retiré du transporteur 60 selon la flêche F14 pour être placé horizontalement, selon la flêche F15 sur un plan de travail 66 où va se terminer l'élaboration de la préparation culinaire, comme on va le décrire ci-après.

Parallèlement à ce qui vient d'être décrit, on procède au réchauffage des sous-ensembles 52, comme représenté sur la figure 6.

Chaque enveloppe 54 est ouverte et éliminée. Le sous-ensemble 52 qu'elle contient en est retiré et est posé horizontalement selon la flêche F16 sur un transporteur 70 de tout type connu, se déplaçant selon la flêche F17.

Chaque sous-ensemble 52 est ainsi conduit au-dessous d'un gril 71 à éléments radiants 72.

La vitesse du transporteur 70, la longueur du gril 71, le nombre d'éléments radiants 72 sont coordonnés pour obtenir la décongélation et le réchauffage complets des sous-ensembles 52 dans les meilleures conditions possibles et indéfiniment répétées automatiquement, sans les aléas de la pratique manuelle.

Mais, ici, l'action du gril 71 a un effet très particulier car il provoque la cuisson du corps de nature collante 42 et du produit 45, ceux-ci créant ensemble une sorte de croûte imperméable grâce à laquelle la sauce intérieure 21 peut se liquéfier en se réchauffant sans pour autant couler à l'extérieur.

Ainsi, bien que le sous-ensemble 52 soit pour l'essentiel formé d'une sauce coulante, il peut être manipulé non seulement quand il est surgelé et donc dur mais également après réchauffage, à la sortie du gril 71.

A la sortie du gril 71, chaque sous-ensemble 52 est retiré du transporteur 70 selon la flêche F18 pour être placé horizontalement selon la flêche F19 sur le plan de travail 66 où va se terminer l'élaboration de la préparation culinaire, comme on va le décrire ci-après.

C'est à ce moment là seulement que les sous-ensembles 12 et 52 se rejoignent, c'est-à-dire quand ils sont chauds, cuits et prêts à la consommation.

On place le sous-ensemble 52 sur le sous-ensemble 12, soit directement soit après avoir posé sur le sous-ensemble 12 des compléments alimentaires tels que des rondelles de tomates, de concombres, de cornichons, etc.

Tous les compléments alimentaires, ingrédients et condiments voulus pour la préparation culinaire complète sont disposés dans des bacs 80 accessibles au personnel qui achève sur le plan de travail 66 l'élaboration de la préparation culinaire et qui sélectionne, selon chaque recette, les différents compléments contenus dans les bacs 80 pour les associer aux sous-ensembles 12 et 52, comme symbolisé par la flêche F20.

L'invention permet différentes présentations de la préparation culinaire.

Sur la figure 8 on a représenté dans une assiette 90 un ensemble formé de deux sous-ensembles 12 et 52 seuls. On remarque que le sous-ensemble 52 est encore intact, d'un seul tenant, et posé sur le sous-ensemble 12 à la manière d'une croquette.

On peut de la sorte offrir à la clientèle des steaks hachés tous identiques mais recouverts sélectivement de différentes sauces, selon la demande de la clientèle sauce bourguignonne, sauce normande, sauce aux champignons, sauce au fromage etc.

Présentée dans l'assiette 90, la préparation est consommée sur place, dans des conditions traditionnelles et peut, bien entendu, être accompagnée de différents compléments : feuilles de salade, pommes de terre frites et autres légumes (non représentés).

Sur la figure 9 on a représenté un ensemble composé des deux sous-ensembles 12 et 52 constituant une préparation culinaire conforme à l'invention placée entre deux morceaux de pain ronds ou allongés 91 et 92. On remarque, en outre, que l'on a placé des compléments alimentaires 93 entre le sous-ensemble 12 et le sous-ensemble 52 et d'autres compléments tels que des feuilles de salade 94 entre le morceau de pain 91 et le sous-ensemble 12, ainsi que d'autres compléments alimentaires 95 entre le sous-ensemble 52 et le morceau de pain 92.

Cette présentation en sandwich permet une consommation facile, soit sur place, soit à l'extérieur et doit se suffire à elle-même car il serait très incommode d'ajouter des produits à un sandwich tenu à la main alors que cela est très facile lorsque l'on dispose d'une assiette 90 et de couverts, pour consommer la préparation non comme un sandwich entre deux morceaux de pain 91 et 92 mais comme des mets traditionnels.

Pour aboutir à une préparation culinaire complète et présentable, on place d'abord sur le plan de travail 66, soit l'assiette 90, soit le morceau de pain 91. Puis on empile selon un ordre qui dépend de chaque recette, les deux sous-ensembles 12 et 52 constituant un ensemble et leurs éventuels compléments alimentaires, puis, dans le cas d'un sandwich, on termine par le morceau de pain 92.

La croûte imperméable 42-45 renferme la sauce 21 liquéfiée mais, bien entendu, ne présente aucune solidité lorsque l'on mord dans le sanswich ou lorsque l'on coupe l'ensemble dans une assiette.

C'est donc au moment même de la consommation que la sauce 21 apparaît avec sa consistance normale du fait de la dissociation de la sauce 21 proprement dite et de son enrobage devenu une croûte imperméable.

Elle est préparée et cuite dans le récipient 20 selon toute recette voulue en tenant compte du fait que sa consistance doit être suffisamment liquide pour napper le sous-ensemble 12 mais suffisamment épaisse pour ne pas couler exagérément, ce qui serait particulièrement regrettable pour la consommation en sandwich.

L'exemple que l'on a retenu pour illustrer l'invention peut avoir beaucoup de variantes, en particulier pour ce qui concerne les caractéristiques des produits :
- La viande hachée peut être remplacé par du poisson, de la volaille ou même des produits végétaux galette de céréales, tofou, crèpe, etc.
- La sauce peut être quelconque selon les multiples recettes connues ou créées pour la circonstance.
- la croûte imperméable qui enrobe la sauce peut également être réalisée autrement que selon le pannage décrit (oeufs battus et chapelure). Il faut que la sauce soit en quelque sorte "encapsulée" et la seule condition est que le corps retenu soit comestible et de goût agréable pour le consommateur. On peut adopter ou créer une "colle alimentaire" qui ne sèche pas trop vite afin de ne pas brûler lors du passage sous le gril 71.

Il peut également s'agir de produits modernes, ayant de très bonnes qualités couvrantes.

Associé à un produit extérieur, le corps doit être de nature collante pour retenir ce produit en surface et l'on peut penser à une gelée liquide, notamment à base d'agar-agar, à une gelée d'origine animale, de blanc d'oeuf seul (sans le jaune), à des substances huileuses etc.

Il peut s'agir aussi d'une pâte à beignets particulièrement intéressante en raison de son étanchéité naturelle, de son bon goût et de sa belle présentation après cuisson.
- l'éventuel produit de cohésion (décrit plus haut comme étant de la chapelure) peut lui aussi être de différentes natures : riz pilé, graines écrasées de sésame, d'amandes, de noisettes et autres fruits à cerneaux. Mais quand l'on choisit un produit contenant un corps gras, ce qui est le cas des fruits à cerneaux, il est bon de le réduire assez finement pour qu'il se mélange au corps de nature collante et soit enrobé par lui afin d'éviter que le chauffage au gril 71 provoque la combustion localisée de ce produit. Selon que la sauce 21 a besoin d'un réchauffage plus ou moins important, on choisira donc le revêtement 45 en fonction de sa capacité à supporter la température nécessaire à la sauce 21.

Quant au mode de cuisson, il est lui aussi laissé au libre choix de l'homme de métier puisque l'on peut aussi bien agir par grillage, par passage dans un corps chaud tel que de l'eau pour bouillir, de l'huile pour frire etc., par contact avec une plaque de cuisson ou dans un ustensile tel qu'une poêle.

Après cuisson, la préparation culinaire peut être maintenue au chaud (50° Celsius par exemple) dans une étuve, pour un court moment, jusqu'au moment où elle est servie.

Il va de soi qu'une préparation culinaire complète peut recevoir plus d'un sous-ensemble 12 et/ou plus d'un sous-ensemble 52, placés les une contre les autres directement ou avec interposition de compléments alimentaires (salade, légumes, fromage etc.).

## Revendications

**1-** Préparation culinaire caractérisée en ce qu'elle consiste en un ensemble qui comprend au moins deux sous-ensembles distincts :
* un premier sous-ensemble comportant au moins une partie principale telle que de la chair hachée (12),
* un deuxième sous-ensemble (52) comportant au moins une sauce (21) qui est enrobée d'un corps de nature collante (42),
ces deux sous-ensembles distincts étant placés l'un contre l'autre.

**2-** Préparation culinaire selon la revendication 1, caractérisée en ce que le deuxième sous-ensemble (52) est recouvert d'un revêtement de cohésion (45), tel que de la chapelure.

**3-** Préparation selon la revendication 1, caractérisée en ce que le deuxième sous-ensemble (52) est conditionné seul et conservé ainsi.

**4-** Préparation selon la revendication 1, caractérisée en ce que le premier sous-ensemble (12) est surgelé.

**5-** Préparation selon la revendication 1, caractérisée en ce que le premier sous-ensemble (12) est frais.

**6-** Préparation selon la revendication 1, caractérisée en ce que le premier sous-ensemble (12) est pré-cuit.

**7-** Préparation selon la revendication 1, caractérisée en ce que les deux sous-ensembles (12 et 52) sont placés l'un contre l'autre.

**8-** Préparation selon la revendication 1, caractérisée en ce que les deux sous-ensembles (12 et 52) sont séparés par d'autres produits alimentaires (93).

**9-** Préparation selon la revendication 1, caractérisée en ce qu'après cuisson, le deuxième sous-ensemble (52) se dissocie lors de la consommation de l'ensemble et nappe en l'imprégnant au moins en partie le premier sous-ensemble (12) ainsi que, le cas échéant, les autres produits alimentaires (93-94).

**10-** Procédé pour obtenir une préparation culinaire consistant en un ensemble qui comprend au moins deux sous-ensembles (12 et 52) caractérisé en ce que l'on prépare un sous-ensemble (52) comportant une sauce (21), que l'on divise cette dernière en portions (41), que l'on enrobe chaque portion (41) avec un corps de nature collante (42), que l'on refroidit ledit sous-ensemble (52) et qu'on le conserve.

**11-** Procédé selon la revendication 10, caractérisé en ce que l'on prépare une sauce (21), que l'on place cette dernière dans un moule de mise en forme (26-28-30) et qu'on la refroidit.

**12-** Procédé selon la revendication 11, caractérisé en ce que l'on moule la sauce portion par portion,

**13-** Procédé selon la revendication 11, caractérisé en ce que l'on démoule la sauce et qu'on la découpe en tranches (41) formant chacune une portion froide et rigide.

**14-** Procédé selon la revendication 11, caractérisé en ce que l'on donne au moule (26-28-30) une section dont la forme et les dimensions correspondent à celles de la partie principale (12).

**15-** Procédé selon la revendication 10, caractérisé en ce que l'on recouvre chaque portion enrobée (41-42) au moyen d'un revêtement de cohésion (45).

**16-** Procédé selon la revendication 10, caractérisé en ce qu'afin d'obtenir une préparation culinaire cuite, chaude et prête à la consommation :
* on soumet séparément les deux sous-ensembles (12 et 52) à deux traitements thermiques distincts jusqu'à ce que le premier sous-ensemble (12) soit cuit et que le deuxième sous-ensemble (52) présente une partie extérieure (42-45) formée d'une croûte imperméable contenant une sauce (21) de consistance nappante,
* on associe au moins deux sous-ensembles (12 et 52) et, éventuellement, des compléments alimentaires (93-94).
